Europäisches Patentamt

European Patent Office

Office européen des brevets

(11) Veröffentlichungsnummer: **0 232 433**
**A1**

## (12) EUROPÄISCHE PATENTANMELDUNG

(21) Anmeldenummer: 85116030.9

(22) Anmeldetag: **16.12.85**

(51) Int. Cl.4: **B01J 47/08** , B01D 13/02 , C02F 1/42

(43) Veröffentlichungstag der Anmeldung:
**19.08.87 Patentblatt 87/34**

(84) Benannte Vertragsstaaten:
**AT BE CH DE FR GB IT LI NL SE**

(71) Anmelder: **Kunz, Gerhard, Dipl.-Chem. Dr. Ing.**
**Ruhrstrasse 111**
**D-5628 Heiligenhaus(DE)**

(72) Erfinder: **Kunz, Gerhard, Dipl.-Chem. Dr. Ing.**
**Ruhrstrasse 111**
**D-5628 Heiligenhaus(DE)**

(74) Vertreter: **Merten, Fritz**
**Hallerhüttenstrasse 6**
**D-8500 Nürnberg 40(DE)**

(54) Verfahren und Vorrichtung zum Zudosieren von Ionen in Flüssigkeiten, insbesondere wässriger Lösungen.

Fig. 1

EP 0 232 433 A1

## Verfahren und Vorrichtung zum Zudosieren von Ionen in Flüssigkeiten, insbesondere wäßriger Lösungen

(57) Die Erfindung bezieht sich auf ein Verfahren und eine Vorrichtung zum Zudosieren von Ionen in Flüssigkeiten, insbesondere wäßriger Lösungen, bei dem die zuzuführenden Ionen mittels einer elektrischen Potentialdifferenz durch selektive Grenzschichten gelenkt werden.

Es ist bekannt, daß bei der Entsalzung von Flüssigkeiten, insbesondere wäßrigen Lösungen, wie Wasser aller Art, in einer Hintereinanderfolge unterschiedlicher Absorptions-und Desorptionsvorgänge die aus der Flüssigkeit stammenden gelösten Ionenkomponenten der gelösten Salze an Austauscherschichten absorbiert und von diesen Austauscherschichten wiederum durch in Elektrodenräumen erzeugte Ionenströme verdrängt werden. Bei der Erzeugung dieser Verdrängerionenströme in den Elektrodenräumen werden die zu den Verdrängerionenströmen gehörenden Gegenionen mittels selektiv wirkender Grenzschichten, sogenannten Ionenaustauschermembranen, zurückgehalten.

Es wurde nun als nachteilig gefunden, daß beim Betrieb derartiger Anlagen die Konzentration der Gegenionen in den Elektrodenräumen ständig abnimmt, dadurch der elektrische Widerstand und der Energieverbrauch ansteigt und schließlich der gewünschte Entsalzungseffekt nachläßt. Es wurde ferner gefunden, daß die Abnahme dieser Konzentration dadurch erfolgt, daß die Gegenionen durch die sperrende Membran hindurch in die Entsalzungskammern diffundieren und dann in die Solekammer gelangen, wo sie mit der Sole ausgespült werden.

Hier setzt die Erfindung ein, der die Aufgabe zugrunde liegt, die aus den Elektrodenräumen in die Sole abdiffundierten Gegenionen wieder in die Elektrodenräume zurückzuführen und/oder neue Gegenionen in die Elektrodenräume einzudosieren, dabei die gewünschten Konzentrationen in den Elektrodenräumen konstant zu halten und diese Rückführung und/oder Neuzuführung von Gegenionen regelbar vorzusehen und die Vorrichtung zur Durchführung des Verfahrens für einen weiten Bereich der Gegenionenkonzentrationen in den Elektrodenräumen einer Entsalzungsanlage praktikabel auszuführen.

Gemäß der Erfindung wird diese Aufgabe der Zudosierung von Gegenionen in die Elektrodenräume einer Entsalzungsanlage dadurch gelöst, daß eine Gegenionen enthaltende Flüssigkeit einem elektrischen Spannungsfeld ausgesetzt wird und dieses Spannungsfeld zum elektrischen Spannungsfeld der Entsalzungsanlage parallel geschaltet ist und in einem Transferraum für Gegenionen erzeugt wird, wobei die Zuführung der elektrischen Spannung zu diesem Transferraum durch Ionenleitung mittels der Elektrolytflüssig keiten aus den Elektrodenräumen der Entsalzungsanlage und/oder durch Elektronenleitung mittels Elektroden erzeugt wird und daß der Transferraum durch mindestens eine Grenzschicht von den Elektrodenräumen der Entsalzungsanlage abgeschirmt wird, wobei die Grenzschicht zu einem kathodischen Elektrodenraum nur für Kationen durchlässig und für Anionen sperrend ausgeführt ist und die Grenzschicht zu einem anodischen Elektrodenraum nur für Anionen durchlässig und für Kationen sperrend ausgeführt ist, und daß die die kationendurchlässige Grenzschicht unter der Einwirkung eines elektrischen Feldes passierenden Kationen in den kathodischen Elektrodenraum der Entsalzungsanlage und die die anionendurchlässige Grenzschicht unter der Einwirkung eines elektrischen Feldes passierenden Anionen in den anodischen Elektrodenraum der Entsalzungsanlage geleitet werden.

Zum Durchführen dieses Verfahrens wird eine Vorrichtung, bestehend aus mindestens einem Gefäß mit mindestens einer in diesem angeordneten Transferkammer für die Gegenionen enthaltende Flüssigkeit sowie mindestens einer Abschirmkammer, wobei diese Kammern mit Zu-und Ableitungen für Flüssigkeit ausgestattet sind, verwendet, wobei sich die Vorrichtung erfindungsgemäß dadurch auszeichnet, daß die Transferkammer als von Ionenaustauschermembranen als Grezschichten gebildete Kammer ausgeführt ist, daß jede Ionenaustauschermembran eine Durchlässigkeit für jeweils bestimmte Ionen aufweist, für gegensätzlich geladene Ionen wie auch Flüssigkeit hingegen undurchlässig ausgeführt ist und daß die Zu-und Ableitungen der kathodischen Abschirmkammer bzw. die Durchtrittsöffnungen zur Kathodenkammer der Entsalzungsanlage und die Zu-und Ableitungen der anodischen Abschirmkammer zur Anodenkammer der Entsalzungsanlage führen und daß die Zuleitung zur Transferkammer mit der Solekammer der Entsalzungsanlage bzw. mit einem Speicherbehälter für Gegenionen enthaltende Flüssigkeit verbunden ist und daß die Ableitung der Transferkammer als Entleerungsleitung ausgebildet ist.

Durch diese Maßnahmen der Einwirkung der elektrischen Pontentialdifferenz der Entsalzungsanlage auf eine Gegenionen enthaltende Flüssigkeit in einer von Ionenaustauschermembranen gebildeten Transferkammer und die Überführung bzw. Dosierung von Kationen in die Kathodenkammer der Entsalzungsanlage und die Überführung bzw. Dosierung von Anionen in die Anodenkammer der Entsalzungsanlage wird die der Erfindung zugrunde liegende Aufgabe vorteilhaft gelöst.

Die Vorteile sind im einzelnen:

a) Die Überführung bzw. Dosierung von Gegenionen in die jeweiligen Elektrodenkammern der Entsalzungsanlage gleichen Verluste an Gegenionen in diesen Elektrodenkammern, die beim Entsalzungsprozeß entstehen, aus. Durch diese Überführung wird die Gegenionenkonzentration und damit der elektrische Widerstand in den Elektrodenkammern konstant gehalten und ein gleichbleibend guter Entsalzungseffekt in der Entsalzungsanlage erzielt.

b) Ein Vorteil des erfindungsgemäßen Verfahrens ist, daß durch die Verwendung der Gegenionen aus der Absole der Entsalzungsanlage ein kostengünstiger Verlustausgleich an Gegenionen erzielt wird.

c) Ein weiterer Vorteil des erfindungsgemäßen Verfahrens ist, daß durch die Überführung von Gegenionen in die entsprechenden Elektrodenkammern der Entsalzungsanlage die gewünschte Konzentration ohne Betriebsunterbrechung eingestellt wird.

d) Ein besonderer Vorteil der Erfindung ist, daß durch die Verwendung des elektrischen Spannungspotentials der eigentlichen Entsalzungsanlage, die apparative Ausführung für die Dosierung der die Konzentrationen in den Elektrodenkammern bestimmenden Gegenionen einfach und leicht zu handhaben ist.

Weitere vorteilhafte Weiterbildungen der Erfindung in verfahrens-und auch vorrichtungstechnischer Hinsicht können den verbleibenden Unteransprüchen entnommen werden.

In den Zeichnungen sind mehrere Ausführungsbeispiele der Erfindung, ohne sie auf diese allein zu beschränken, schematisch dargestellt. Es zeigt:

Fig.1 einen Längsmittelschnitt durch eine Vorrichtung gemäß der Erfindung, bei der in einem Gefäß eine Transferkammer mit zwei Abschirmkammern und ein an die Transferkammer angeschlossenes Gefäß für Gegenionen enthaltende Flüssigkeit gezeigt wird,

Fig.2 einen Längsmittelschnitt durch eine Vorrichtung gemäß der Erfindung, bei der in einem Gefäß eine Transferkammer mit einer Abschirmkammer und die Zuleitung für Gegenionen enthaltende Absole (Konzentrat) einer Entsalzungsanlage dargestellt sind.

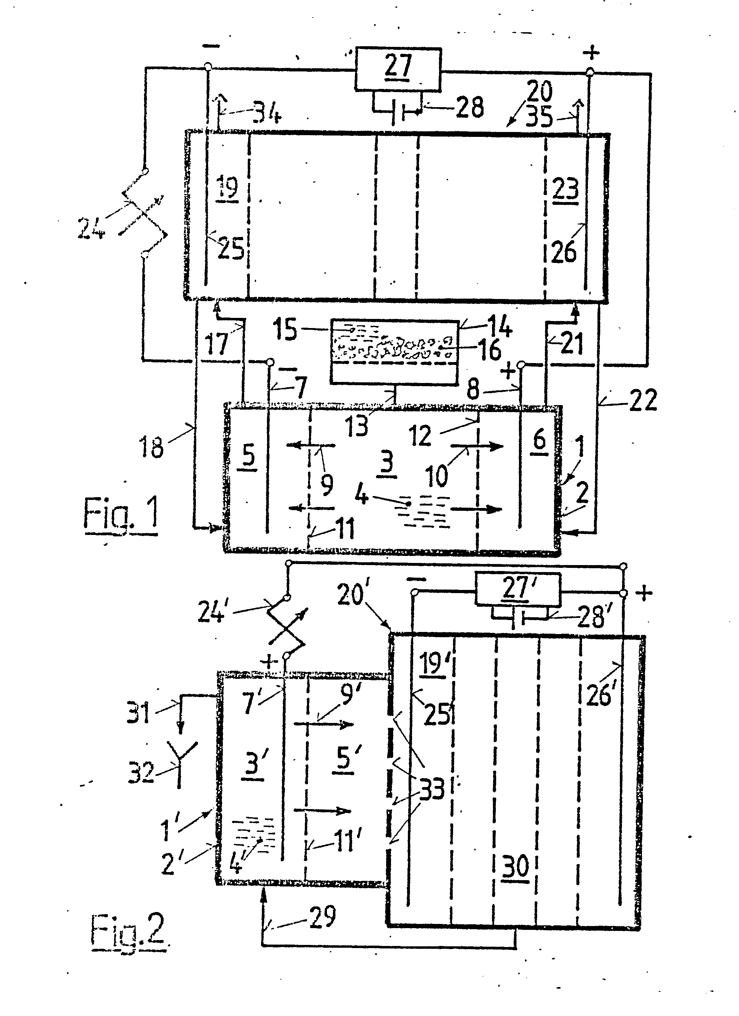

Die Vorrichtung 1 gemäß der Erfindung wird entsprechend der Darstellung in Fig.1 im wesentlichen von einem Gefäß 2 für eine in diesem vorgesehene Transferkammer 3, in der eine, die Gegenionen enthaltende Flüssigkeit 4 einem elektrischen Feld ausgesetzt ist und für in diesem ferner vorgesehenen Abschirmkammern 5,6 , in denen in einem von den Elektroden 7,8 gebildeten Spannungsfeld die Überführung der Gegenionen 9,1o erfolgt, gebildet. Der Transferkammer 3, die seitlich von Grenzschichten in Form von Ionenaustauschermembranen 11,12 begrenzt wird, ist eine Abschirmkammer 5 mit einer Kathode 7 für Kationen 9 und eine Abschirmkammer 6 mit einer Anode 8 für Anionen 1o zugeordnet. Die Ionenaustauschermembran 11 zwischen der Transferkammer 3 und der Abschirmkammer 5 ist derart ausgebildet, daß sie die Kationen 9 in die Abschirmkammer 5 hindurchläßt, den Durchtritt einer Flüssigkeit 4 wie auch den Durchtritt der eine andere Ladung aufweisenden Ionen hingegen sperrt. Die Ionenaustauschermembran 12 zwischen der Transferkammer 3 und der Abschirmkammer 6 ist derart ausgebildet, daß sie die Anionen 1o in die Abschirmkammer 6 hindurchläßt, den Durchtritt einer Flüssigkeit 4 wie auch den Durchtritt der eine andere Ladung aufweisenden Ionen hingegen sperrt. Dabei werden unter den kationischen Gegenionen 9 beispielsweise Natriumionen und unter den anionischen Gegenionen 1o beispielsweise Sulfationen verstanden. Die Transferkammer 3 ist über eine Zuführungsleitung 13 mit einem Vorratsgefäß 14 verbunden, in dem sich eine gesättigte Gegenionenlösung 15, beispielsweise eine Natriumsulfatlösung, und ein Vorrat 16, beispielsweise festes Natriumsulfat, befindet. Die Abschirmkammer 5 ist an ihrem oberen Ende mit einer Steigleitung 17 und an ihrem unteren Ende mit der Kathodenkammer 19 der eigentlichen Entsalzungsanlage 2o verbunden. Die Abschirmkammer 6 ist an ihrem oberen Ende mit einer Steigleitung 21 und an ihrem unteren Ende mit einer Falleitung 22 mit der Anodenkammer 23 der eigentlichen Entsalzungsanlage verbunden. Die Kathode 7, die in die Abschirmkammer 5 hineinragt, ist unter Zwischenschaltung mindestens einer Regelvorrichtung 24 an der Kathode 25 der Entsalzungsanlage 2o angeschlossen. Die Anode 8, die in die Abschirmkammer 6 hineinragt, ist an der Anode 26 der Entsalzungsanlage 2o angeschlossen. Die Elektroden 25 und 26 der Entsalzungsanlage 2o sind an einer Stromversorgung 27 einer Gleichstromquelle 28 angeschlossen.

Das Ausführungsbeispiel der Erfindung gemäß Fig.2 entspricht prinzipiell dem vorbeschriebenen Ausführungsbeispiel und unterscheidet sich von diesem dadurch, daß zum einen die Dosierung bzw. Überführung von Gegenionen nur in eine der Elektrodenkammern der Entsalzungsanlage erfolgt, und daß als Gegenionenlösung die Absole (Konzentrat) der eigentlichen Entsalzungsanlage verwendet wird.

Hierbei wird gemäß Fig.2 die erfindungsgemäße Vorrichtung 1' von einem Gefäß 2' für eine in diesem vorgesehene Transferkammer 3', in der eine, die Gegenionen enthaltende Flüssigkeit 4' einem elektrischen Feld ausgesetzt ist und für in diesem ferner vorgesehene Abschirmkammer 5', in der in einem von der Elektrode 7' und der Elektrode 25' der Entsalzungsanlage 2o' gebildeten Spannungsfeld die Überführung der Gegenionen 9' erfolgt, gebildet. Der Transferkammer 3', die seitlich von einer Grenzschicht in Form einer Ionenaustauschermembran 11' begrenzt wird, ist eine Abschirmkammer 5' für Kationen 9' zugeordnet, Die Ionenaustauschermembran 11' zwischen der Transferkammer 3' und der Abschirmkammer 5' ist derart ausgebildet, daß sie die Kationen 9' in die Abschirmkammer 5' hindurchläßt, den Durchtritt einer Flüssigkeit 4' wie auch den Durchtritt der eine andere Ladung aufweisenden Ionen hingegen sperrt. Dabei werden unter den kationischen Gegenionen 9' beispielsweise Natriumionen verstanden. Die Transferkammer 3'·ist an ihrem unteren Ende mit einer Leitung 29 an die Solekammer 3o der Entsalzungsanlage 2o' angeschlossen und an ihrem oberen Ende mit einer Ableitung 31 zum Kanal 32 ausgestattet. Die Abschirmkammer 5' ist mit mehreren Durchtrittsöffnungen 33 mit der Kathodenkammer 19' der Entsalzungsanlage 2o' verbunden. Die Anode 7', die in die Transferkammer 3' hineinragt, ist unter Zwischenschaltung mindestens einer Regelvorrichtung 24' an der Anode 26' der Entsalzungsanlage 2o' angeschlossen. Die Elektroden 25' und 26' der Entsalzungsanlage 2o' sind an einer Stromversorgung 27' einer Gleichstromquelle 28' angeschlossen. Die Dosierung bzw. Überführung der Gegenionen 9,1o aus der Flüssigkeit 4, die sich in der Transferkammer 3 befindet, durch die Ionenaustauschermembranen 11,12 hindurch in die Abschirmkammer 5,6 erfolgt durch die Einwirkung eines elektrischen Feldes zwischen den Elektroden 7,8. Im Vorratsgefäß 14 befindet sich ein Vorrat 16 in fester Konsistenz, beispielsweise Natriumsulfat, und eine gesättigte Lösung 15, die in diesem Beispiel als Gegenionen Natriumionen und Sulfationen enthält. Die Leitung 13 bildet die Verbindung zwischen den Vorratsgefäß 14 und der Transferkammer 3, in der durch Abwanderung dieser Ionen 9,1o eine Herabsetzung ihrer Konzentration in der Flüssigkeit 4 erfolgt. Diese Herabsetzung der Konzentration hat auch eine Herab setzung des spezifischen Gewichtes der Lösung 4 zur Folge, wodurch aufgrund der Schwerkraft die schwere, weil gesättigte, Lösung 15 durch die Leitung 13 in die Transferkammer 3 strömt und einen gleichgroßen Anteil der leichteren Lösung 4, ebenfalls durch die Leitung 13, nach oben in das Vorratsgefäß 14 verdrängt, wo sie neue Gegenionen aus dem Vorrat 16 aufnimmt und wieder konzentrierte Lösung 15 bildet. In der Transferkammer 3 wandern unter Einwirkung des elektrischen Feldes zwischen den Elektroden 7,8 die Kationen 9, beispielsweise Natriumionen, durch die kationendurchlässige Ionenaustauschermembran 11 hindurch in die Abschirmkammer 5 und die Anionen 1o, beispielsweise Sulfationen, durch die anionendurchlässige Ionenaustauschermembran 12 hindurch in die Abschirmkammer 6. An der Elektrode 7 entstehen durch die allgemein bekannte Kathodenreaktion die zu den kathodischen Gegenionen 9 zugehörigen Hydroxylionen als Anionen, sowie gasförmiger Wasserstoff als Nebenprodukt. Dieser Wasserstoff strömt mit den in die Abschirmkammer5eingewanderten Gegenionen 9 und den gebildeten zugehörigen Anionen, beispielsweise in Form von Natriumhydroxyd, als Gas-Flüssigkeitsgemisch durch die Leitung 17 in die Kathodenkammer 19 der eigentlichen Entsalzungsanlage 2o, wodurch der Verlust an Gegenionen, beispielsweise Natriumionen, in dieser Kathodenkammer 19 ersetzt wird. Der durch die Leitung 17 aus der Abschirmkammer 5 abströmende Flüssigkeitsanteil wird durch einen entsprechenden Flüssigkeitsanteil aus der Kathodenkammer 19 ersetzt, indem er durch die Leitung 18 in die Abschirmkammer 5 strömt. Die treibende Kraft für diese Kreislaufströmung, die durch die Leitung 17 die Zuführung der Gegenionen bewirkt, resultiert aus der spezifischen Gewichtsdifferenz des leichteren Gas-Flüssigkeitsgemisches in der Leitung 17 und der schwereren, weil gasfreien, Flüssigkeit in der Leitung 18. Das durch die Leitung 17 in die Kathodenkammer 19 gelangende Wasserstoffgas entweicht zusammen mit dem an der Elektrode 25 gebildeten Wasserstoffgas durch den Entlüfter 34 der Kathodenkammer 19.

An der Elektrode 8 entstehen durch die allgemein bekannte Anodenreaktion die zu den anodischen Gegenionen 1o zugehörigen Wasserstoffionen als Kationen, sowie gasförmiger Sauerstoff als Nebenprodukt. Dieser Sauerstoff strömt mit den in die Abschirmkammer 6 eingewanderten Gegenionen 1o und den gebildeten zugehörigen Kationen, beispielsweise in Form von Schwefelsäure, als Gas-Flüssigkeitsgemisch durch die Leitung 21 in die Anodenkammer 23 der eigentlichen Entsalzungsanlage 2o, wodurch der Verlust an Gegenionen, beispielsweise Sulfationen, in dieser Anodenkammer 23 ersetztwird. Der durch die Leitung 21 aus der Abschirmkammer 6 abströmende Flüssigkeitsanteil wird durch einen entsprechenden Flüssigkeitsanteil aus der Anodenkammer 23 ersetzt, indem er durch die Leitung 22 in die Abschirmkammer 6 strömt. Die treibebende Kraft für diese Kreislaufströmung, die durch die Leitung 21 die Zuführung der Gegenionen bewirkt, resultiert aus der spezifischen Gewichtsdifferenz des leichteren Gas-Flüssigkeitsgemisches in der Leitung 21 und der schwereren, weil gasfreien, Flüssigkeit in der Leitung 22. Das durch die Leitung 21 in die Anodenkammer 23 gelangende Sauerstoffgas entweicht zusammen mit dem an der Elektrode 26 gebildeten Sauerstoffgas durch den Entlüfter 35 der Anodenkammer 23. Die Verluste an Gegenionen in den Elektrodenkammern der eigentlichen Entsalzungsanlage 2o, also beispielsweise der Verlust an Natriumionen in der Kathodenkammer 19 und beispielsweise der Verlust an Sulfationen in der Anodenkammer 23 können je nach den Betriebsbedingungen der Entsalzungsanlage verschieden hoch sein und erfordern eine Anpassung der Gegenionenzudosierung. Mittels der Regeleinheit 24, beispielsweise in Form eines regelbaren elektrischen Widerstandes, wird die Dosierung bzw. Überführung der Gegenionenmenge 9,1o pro Zeiteinheit in die Abschirmkammern 5,6 und durch die Leitungen 17,21 in die Elektrodenkammern 19,23 eingestellt und der Verlustrate angepaßt. Durch Betätigen der Regeleinheit 24 von Hand und/oder automatisch wird die elektrische Potentialdifferenz an den Elektroden 7,8 verändert und damit auch der elektrische Stromfluß zwischen den Elektroden 7,8, wobei über das allgemein bekannte elektrischchemische Äquivatentverhältnis auch die Zudosierung der Gegenionen 9,1o in die Abschirmkammern 5,6 und damit auch in die Elektrodenkammern 19,23 verändert wird.

Die Dosierung bzw. Überführung von Gegenionen 9', beispielsweise Kationen, aus einer Absole (Konzentrat) 4', die in einer Entsalzungsanlage 2o' in deren Solekammer 3o' entsteht und durch die Leitung 29 einer Transferkammer 3' zugeführt wird, durch die Ionenaustrauschermembran 11' hindurch in die Abschirmkammer 5', erfolgt durch die Einwirkung eines elektrischen Feldes zwischen der in der Transferkammer 3' angeordneten Elektrode 7' und der Elektrode 25', die in der Elektrodenkammer 19', beispielsweise einer Kathodenkammer einer Entsalzungsanlage 2o' angeordnet ist, wie Fig.2 zeigt. An der Elektrode 7', die als Anode geschaltet ist, wird durch die allgemein bekannte Anodenreaktion eine Wasserstoffionenmenge pro Zeiteinheit gebildet, die der in der gleichen Zeiteinheit aus der Transferkammer 3' durch die Ionenaustauschermembran 11' hindurch abgewanderten Kationenmenge 9', beispielsweise Natriumionen, äquivalent ist. Die durch die Ionenaustauschermembran 11' hindurch in die Abschirmkammer 5' eingewanderten Gegenionen 9', beispielsweise Kationen wie Natriumionen, wandern durch die Durchtrittsöffnungen 33 in die Elektrodenkammer 19', beispielsweise eine Kathodenkammer, einer Entsalzungsanlage 2o' und ersetzen den Verlust an Gegenionen in dieser Elektrodenkammer 19', beispielsweise Natriumionen, der beim eigentlichen Entsalzungsvorgang entsteht. Die in der Solekammer 3o der eigentlichen Entsalzungsanlage 2o' und durch die Leitung 29 der Transferkammer 3' zugeführte Absole 4' wird, zusammen mit dem an der Elektrode 7' entstandenen Elektrolytgas, beispielsweise Sauerstoff, durch die Leitung 31 in den Kanal 32 geleitet. Der Verlust an Gegenionen in der Elektrodenkammer 19', beispielsweise einer Kathodenkammer der Entsalzungsanlage 2o', also beispielsweise der Verlust an Natriumionen, können je nach den Betriebsbedingungen des eigentlichen Entsalzungsvorganges verschieden hoch sein und erfordern eine Anpassung der Gegenionenzudosierung. Mittels der Regeleinheit 24', beispielsweise in Form eines regelbaren elektrischen Widerstandes, wird die Dosierung bzw. Überführung der Gegenionen 9' pro Zeiteinheit eingestellt und der Verlustrate angepaßt. Durch Betätigen der Regeleinheit 24' von Hand und/oder automatisch wird die elektrische Potentialdifferenz an den Elektroden 7' und 25' verändert und damit auch der elektrische Stromfluß zwischen den Elektroden 7',25', wobei über das allgemein bekannte elektrochemische Äquivalentverhältnis auch die Zudosierung der Gegenionen 9' in die Abschirmkammer 5' und damit auch in die Elektrodenkammer 19' verändert wird.

## Ansprüche

1. Verfahren zum Dosieren von Gegenionen in die Elektrodenräume einer Entsalzungsanlage, dadurch gekennzeichnet, daß eine Gegenionen enthaltende Flüssigkeit einem elektrischen Spannungsfeld ausgesetzt wird und dieses Spannungsfeld zum elektrischen Spannungsfeld der Entsalzungsanlage parallel geschaltet ist und in einem Transferraum für Gegenionen erzeugt wird, wobei die Zuführung der elektrischen Spannung zu diesem Transferraum durch Ionenleitung mittels der Elektrolytflüssigkeiten aus den Elektrodenräumen der Entsalzungsanlage und/oder durch Elektronenleitung mittels Elektroden erzeugt wird und daß der Transferraum durch mindestens eine Grenzschicht von den Elektrodenräumen der Entsalzungsanlage abgeschirmt wird, wobei die Grenzschicht zu einem kathodischen Elektrodenraum nur für Kationen durchlässig und für Anionen sperrend ausgeführt ist und die Grenzschicht zu einem anodischen Elektrodenraum nur für Anionen durchlässig und für Kationen sperrend ausgeführt ist, und daß die die kationendurchlässige Grenzschicht unter der Einwirkung eines elektrischen Feldes passierenden Kationen in den kathodischen Elektrodenraum der Entsalzungsanlage und die die anionendurchlässige Grenzschicht unter der Einwirkung eines elektrischen Feldes passierenden Anionen in den anodischen Elektrodenraum der Entsalzungsanlage geleitet werden.

2. Verfahren nach Anspruch 1, dadurch gekennzeichnet, daß mittels eines elektrischen Spannungsfeldes Kationen durch eine kationendurchlässige und Anionen sperrende Grenzschicht in den Kathodenraum einer Entsalzungsanlage und Anionen durch eine anionendurchlässige und Kationen sperrende Grenzschicht in den Anodenraum einer Entsalzungsanlage überführt werden, wobei die zu überführenden Kationen und Anionen in einer Flüssigkeit in Form eines Salzes bevorratet werden.

3. Verfahren nach Anspruch 1, dadurch gekennzeichnet, daß mittels eines elektrischen Spannungsfeldes Kationen durch eine kationendurchlässige und Anionen sperrende Grenzschicht in den Kathodenraum einer Entsalzungsanlage überführt werden, wobei die zu überführenden Kationen in Form einer Lauge in einer Flüssigkeit bevorratet werden.

4. Verfahren nach Anspruch 1, dadurch gekennzeichnet, daß mittels eines elektrischen Spannungsfeldes Anionen durch eine anionendurchlässige und Kationen sperrende Grenzschicht in den Anodenraum einer Entsalzungsanlage überführt werden, wobei die zu überführenden Anionen in Form einer Säure in einer Flüssigkeit bevorratet werden.

5. Verfahren nach Anspruch 1, dadurch gekennzeichnet, daß die Kationen der Absole (Konzentrat) einer Entsalzungsanlage in den Kathodenraum der Entsalzungsanlage überführt werden.

6. Verfahren nach Anspruch 1, dadurch gekennzeichnet, daß die Ionen der Absole - (Konzentrat) einer Entsalzungsanlage zur Überführung in die Elektrodenräume der Entsalzungsanlage verwendet werden.

7. Verfahren nach den Ansprüchen 1 bis 6, dadurch gekennzeichnet, daß der Grad der Zudosierung von Gegenionen in die Elektrodenräume einer Entsalzungsanlage durch Variation der Stärke des auf die zu überführenden Gegenionen einwirkenden elektrischen Spannungspotentials erzielt wird.

8. Verfahren nach mindestens einem der Ansprüche 1 bis 7, dadurch geeknnzeichnet, daß die Ausschleusung der Elektrolytgase gemeinsam mit der Ausschleusung der Elektrolytgase der Entsalzungsanlage erfolgt.

9. Verfahren nach den Ansprüchen 1 bis 8, dadurch gekennzeichnet, daß die Zudosierung von Gegenionen in die Elektrodenräume einer Entsalzungs anlage kontinuierlich erfolgt.

1o. Vorrichtung zum Durchführen des Verfahrens nach mindestens einem der Ansprüche 1 bis 9, bestehend aus mindestens einem Gefäß mit mindestens einer in diesem angeordneten Transferkammer für die Gegenionen enthaltende Flüssigkeit sowie mindestens einer Abschirmkammer, wobei diese Kammern mit Zu-und Ableitungen für Flüssigkeit ausgestattet sind, dadurch gekennzeichnet, daß die Transferkammer - (3,3') als von Ionenaustauschermembranen - (11,12,11') als Grenzschichten gebildete Kammer ausgeführt ist, daß jede Ionenaustauschermembran eine Durchlässigkeit für jeweils bestimmte Ionen aufweist, für gegensätzlich geladene Ionen wie auch Flüssigkeit hingegen undurchlässig ausgeführt ist und daß die Zu-und Ableitungen (17,18) der kathodischen Abschirmkammer (5,5') bzw. Durchtrittsöffnungen (33) zur Kathodenkammer - (19) der Entsalzungsanlage (2o) bzw. zur Kathodenkammer (19') der Entsalzungsanlage (2o') und die Zu-und Ableitungen (21,22) der anodischen Abschirmkammer (6) zur Anodenkammer (23) der Entsalzungsanlage (2o) führen, und daß die Zuleitung (29) zur Transferkammer (3') mit der Solekammer (3o) der Entsalzungsanlage (2o') bzw. die Zuleitung (13) der Transferkammer (3) mit einem Speicherbehälter (14) für Gegenionen enthaltende Flüssigkeit (15) verbunden ist und daß die Ableitung (31) der Transferkammer (3') als Entleerungsleitung aus gebildet ist.

11. Vorrichtung nach Anspruch 1o, dadurch gekennzeichnet, daß die Kathode (7) der Abschirmkammer (5) an die Kathode (25) der Entsalzungsanlage (2o), die Anode (8) der Abschirmkammer (6) an die Anode (26) der Entsalzungsanlage (2o) bzw. die Anode (7') der Transferkammer (3') an die Anode (26') der Entsalzungsanlage (2o') angeschlossen ist.

12. Vorrichtung nach Anspruch 1o und 11, dadurch gekennzeichnet, daß in den Stromkreis zur Erzeugung der elektrischen Potentialdifferenz in der Gegenionen enthaltenden Flüssigkeit (4,4') zwischen den Elektroden (7,8) bzw. (7',19') mindestens je eine Regeleinrichtung (24,24') für. die Stromstärke zwischengeschaltet ist.

Fig. 1

Fig.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| E | DE-A-3 423 653 (DR. G. KUNZ)(Offenlegungstag 09.01.1986) * Patentansprüche 1-12 * | 1-12 | B 01 J 47/08 B 01 D 13/02 C 02 F 1/42 |
| A | EP-A-0 113 387 (DR. G. KUNZ) * Patentansprüche 1,2,9,13,19,21,24; Seite 21, Zeilen 1-31; Seite 25, Zeile 10 - Seite 27, Zeile 6; Figuren 1,4,8 * | 1,2,7, 10 | |
| A | DE-A-3 329 813 (DR. G. KUNZ) * Patentansprüche 1,2,4,6-8; Seite 22, Zeile 2 - Seite 25, Zeile 29; Figur 1 * & EP - A - 0 187 880 | 1,2,7, 10,12 | |

RECHERCHIERTE SACHGEBIETE (Int. Cl.4)

B 01 J
B 01 D
C 02 F

Der vorliegende Recherchenbericht wurde für alle Patentansprüche erstellt.

| Recherchenort DEN HAAG | Abschlußdatum der Recherche 14-08-1986 | Prüfer HOORNAERT P.G.R.J. |
|---|---|---|